# EUROPEAN PATENT APPLICATION

(11) **EP 2 990 925 A1**
(43) Date of publication of application: **02.03.2016**
(21) Application number: 14306308.9
(22) Date of filing: 25.08.2014
(51) Int. Cl.: G06F 3/0488

(54) **Apparatus and method for displaying a virtual keyboard**

(71) Applicant: Thomson Licensing, 92130 Issy-les-Moulineaux (FR)
(72) Inventor: Eluard, Marc, 35 576 Cesson Sévigné (FR); Maetz, Yves, 35 576 Cesson Sévigné (FR)
(74) Representative: Browaeys, Jean-Philippe

(57) **Abstract**

A touchscreen apparatus (100) comprises a processor (120) executing (S40) an operating system OS (121) and an application (122), displaying (S41) at least one input field. Upon user selection (S42) of an input field, the OS acquires (S43) a parameter indicative of the type of keyboard adapted to the input expected from the user. The OS retrieves (S44) a virtual keyboard corresponding to the parameter and displays (S45) the retrieved virtual keyboard. The virtual keyboards can be further adapted to correspond to the language used.

## Description

### TECHNICAL FIELD

The present principles relate generally to touchscreen devices and in particular virtual keyboards on such devices.

### BACKGROUND

This section is intended to introduce the reader to various aspects of art, which may be related to various aspects of the present principles that are described and/or claimed below. This discussion is believed to be helpful in providing the reader with background information to facilitate a better understanding of the various aspects of the present principles. Accordingly, it should be understood that these statements are to be read in this light, and not as admissions of prior art.

Touchscreen devices, including, but not limited to, smartphones and tablets, commonly do not have a physical keyboard but rely on virtual keyboards displayed on the touchscreen to allow users to enter text. The operation is simple: when the user "clicks" on a text box, the touchscreen device displays the virtual keyboard. The virtual keyboard is a digital graphical representation of a physical keyboard, containing for example basic lowercase letters and buttons for accessing other character sets such as uppercase letters and digits.

Apple presented the virtual keyboard in US Patent 7941760 that teaches that when a user touches an area of the screen that requires text entry a default keyboard is displayed and different 'page switching' buttons are used to display the different keyboards available (uppercase letters, digits, special characters such as exclamation marks etc.). The touchscreen device determines the layout of the virtual keyboard. Layout is intended to refer to the keys and how they are arranged, i.e. the choice of keys and their arrangement.

On many touchscreen devices the available screen space is quite limited, leaving little space for displaying the virtual keyboard without hiding the input area or other important areas. This is why virtual keyboards are less complete than physical keyboards, necessitating the use of multiple "pages" of keyboards to propose the characters. The user is sometimes obliged to use shortcut keys to navigate between different virtual keyboard pages. In some cases, for example when entering a phone number comprising only digits, this is not necessarily a problem since a keyboard comprising digits is all that is needed. However, as it generally is the same keyboard - lowercase letters - that is offered to the user every time, this can cause annoyance if the user is to enter a phone number.

With current operating systems like iOS or Android, when an application needs keyboard input from the user, the application simply uses a system call to request the operating system to display the virtual keyboard. There is however only one virtual board, that includes multiple pages of different layouts. Applications that wish to use a specific keyboard layout cannot rely on the system-provided virtual keyboard and thus need to implement their own virtual keyboard in the application itself. This can entail a number of drawbacks such as: increased application size leading to increased memory consumption, increased network traffic and latency, and more importantly lack of homogeneity when it comes to the look and feel of virtual keyboards from multiple application providers.

It can therefore be appreciated that there is a need for a solution that can allow for a virtual keyboard solution that overcomes at least some of the drawbacks of the prior art. The present principles address this need.

### SUMMARY OF PRINCIPLES

In a first aspect, the principles are directed to an apparatus comprising a touchscreen and a processor configured to: execute an application causing the touchscreen to display at least one input field; receive, through the touchscreen, a selection of an input field associated with a type parameter; and display on the touchscreen a virtual keyboard corresponding to the type parameter, the virtual keyboard being one of a plurality of virtual keyboards.

Various embodiments of the first aspect include:
the feature that the apparatus further comprises memory configured to store at least one type parameter and the virtual keyboard corresponding to the type parameter,
the feature that the processor is configured to display a standard virtual keyboard in case the memory does not store a virtual keyboard corresponding to the type parameter received. It is advantageous that the processor is configured to adapt the standard virtual keyboard depending on user preferences,
the feature that the processor is configured to execute an operating system to receive the type parameter and display the virtual keyboard,
the feature that the processor is configured to obtain at least one of preferences and conditions, and to adapt the virtual keyboard in response the at least one of preferences and conditions before display, and
the feature that the processor is configured, upon reception of a special type parameter, to obtain data enabling generation of the virtual keyboard. It is advantageous that the data is obtained with the special type parameter. It is alternatively advantageous that the data is retrieved from a further device.

In a second aspect, the principles are directed to a method for displaying a virtual keyboard. An apparatus executes an application causing a touchscreen to display at least one input field; receives, through the touchscreen, a selection of an input field associated with a type parameter; and displays on the touchscreen a virtual keyboard corresponding to the type parameter, the virtual keyboard being one of a plurality of virtual keyboards.

Various embodiments of the second aspect include:
the feature that a user configurable standard virtual keyboard is displayed in case the apparatus does not store a virtual keyboard corresponding to the type parameter received,
the feature that at least one of preferences and conditions is obtained, and the virtual keyboard is adapted in response the at least one of preferences and conditions before display, and
the feature that, upon reception of a special type parameter, data enabling generation of the virtual keyboard are obtained. It is advantageous that the data is obtained with the special type parameter. It is alternatively advantageous that the data are retrieved from a further device.

### BRIEF DESCRIPTION OF DRAWINGS

Preferred features of the present principles will now be described, by way of non-limiting example, with reference to the accompanying drawings, in which
Figure 1 illustrates an exemplary apparatus on which the present principles may be implemented;
Figure 2 illustrates an example of where the present principles may be used;
Figures 3A-3G illustrate exemplary virtual keyboards according to embodiments of the present principles;
Figure 4 illustrates a method for displaying a virtual keyboard; and
Figure 5 illustrates a variant method for displaying a virtual keyboard.

### DESCRIPTION OF EMBODIMENTS

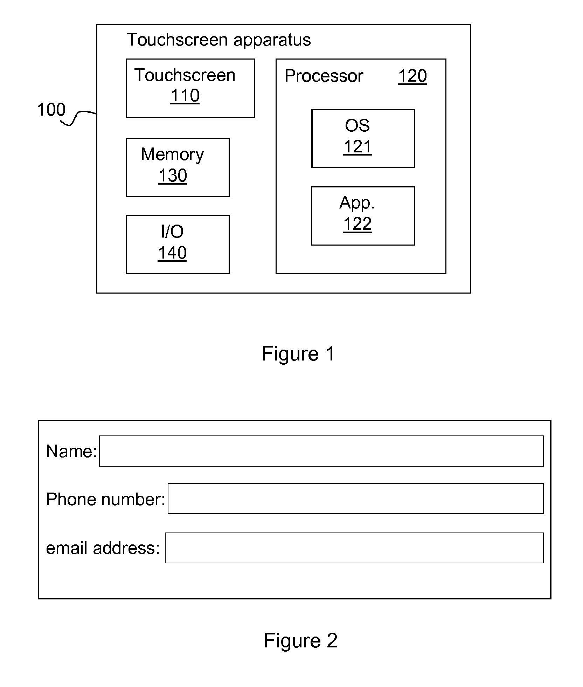

Figure 1 illustrates an exemplary apparatus on which the present principles may be implemented. The apparatus 100 can be any kind of suitable device equipped with a touchscreen 110, such as a Smartphone or a tablet. The apparatus 100 preferably comprises at least one hardware processing unit 120 (such as a CPU, hereinafter "processor"), memory 130, and a communication interface ("I/O") 140 for interaction with other devices. The skilled person will appreciate that the apparatus is very simplified for reasons of clarity and that a real apparatus in addition would comprise features such as internal connections.

The processor is configured to execute an operating system (hereinafter "OS") 121, such as iOS or Android, and to execute an application 122 on the OS 121. As the workings of an OS and how an application is executed on it are well known to the skilled person, this will not be described in detail. In brief, the OS 121 controls the apparatus 100 including the touchscreen 110 unless control is relinquished to the application 122. The application 122 requires input of characters (letters, digits, ...) from the user via a virtual keyboard on the touchscreen 110.

As already explained, prior art solutions provide a virtual keyboard that always is the same. However, as the application "knows" the input that is expected for each input field - mail address, phone number,... - and hence "knows" what characters are expected, it is according to the present principles possible to provide a virtual keyboard in a configuration that is adapted for the input in question. For example, the '@' sign is mostly used when entering email addresses but is very rare in other situations, while uppercase letters are not used in email addresses.

To permit this, keyboard layouts liable to be of use to the user for the input of different kinds of data are identified, i.e. each kind of data is associated with a specific type of virtual keyboard. Each input field (also called text box) comprises in addition to its prior art parameters, a type parameter that indicates the type of data that the user is to enter in the input field. When the virtual keyboard for an input field is to be displayed, the OS 121 verifies the type parameter of the input field and then displays the corresponding virtual keyboard.

It will be appreciated that exactly how the type parameter is acquired by the OS depends on the implementation. The type parameter may be sent from the application to the OS when the user activates (i.e. clicks on) the input field or beforehand, but the OS may also read the type parameters for the input fields when the application is launched. It will also be appreciated that while the description for simplicity uses the singular "type parameter", the type parameter can comprise a plurality of values that can be seen as a plurality of parameters.

Figure 2 illustrates an example, a web page where the user registers to a service. There are dedicated input fields for entering name, phone number and email address. According to the present principles, activating (i.e. clicking on) one of these three input fields causes the display of a corresponding virtual keyboard: alphanumeric uppercase and lowercase characters for the name, digits and possibly hyphens for the phone number, and lowercase alphanumeric characters, digits and special characters like '@' for the email address. It is advantageous that the virtual keyboard for the email address comprises no forbidden special characters (such as accented letters) that according to RFC 5321 cannot be used in an email address; Gmail addresses are even more restrictive.

As mentioned, the input fields are associated with a type parameter that can be provided to the OS when the virtual keyboard is to be displayed. The OS acquires and interprets the type parameter, retrieves the corresponding virtual keyboard from a set of virtual keyboards, preferably stored by the apparatus 100, and displays the virtual keyboard. Naturally, a generic virtual keyboard can be displayed in case the OS cannot interpret the type parameter or in case it does not store the corresponding virtual keyboard.

Different virtual keyboards may also have different built-in behaviours. For example, a virtual keyboard dedicated to entering names could automatically uppercase the first character of each word and lowercase the other characters while a "standard" text entry would require the user to switch manually between uppercase and lowercase.

In an embodiment, at least one of the stored virtual keyboards comprises at least one button that allows the user to change the virtual keyboard to a different virtual keyboard or to change the layout of the displayed virtual keyboard. The user may for example, when editing a message, wish to use digits (initially not displayed) as well as letters (initially displayed).

In a further embodiment, the virtual keyboards are adapted to preferences (for the user or the application) or conditions such as location or situation. For example, for a keyboard related to a calculator that mainly handles operations on numbers, it is possible to have the French version with a comma (",") and the English version with a dot (".") to enable input like "3,1415" and "3.1415" respectively. Another example is that the user has indicated a preference for a so-called ergonomic keyboard rather than an azerty or qwerty keyboard with a standard layout. This can be determined by user preferences such as language or keyboard, or by application preferences such as language. Similarly, conditions may also be used to adapt the virtual keyboard, taking into account for example the location (e.g. country) of the apparatus. In this case, the processor obtains at least one of preferences and conditions and adapts the virtual keyboard accordingly before display.

The situation may also occur where an application needs a virtual keyboard that is not supported by any predetermined virtual keyboard. Thus, in a further embodiment, the application can provide the OS with a special parameter that permits definition of the virtual keyboard. This is preferably done by associating the input field with a specific type parameter followed by data - such as symbols and layout information - that enable the OS to generate dynamically the customized virtual keyboard. It will be appreciated that the symbols are not limited to characters but that they also for example can be images. The data may also be other information enabling the OS to obtain the symbols and layout information from a specific location, such as a web address or a memory address (possibly of a further device). It is then possible to provide specialised virtual keyboards comprising shoe or clothes sizes or even astrological signs. An advantage of letting the OS rather than the application generate the virtual keyboard is that this can allow the OS to provide a consistent "look and feel" between different virtual keyboards.

As an example illustrating such a dynamically generated keyboard, the application may send a list of keys and, for each key, a grid coordinate, which enables the OS to lay out the listed keys according to the coordinates. In a further example, the application provides a list of images (such as e.g. of astrological signs) and corresponding coordinates so that the images may be displayed accordingly by the OS.

In yet a further embodiment, as with prior art virtual keyboards, it is possible to use accelerators on letters to obtain their variations, for example, variations of the letter e - é, è, ë, etc. - when the letter is selected continually for at least a given time.

As an example, a HTML page can comprise the following declaration to enable display of a specific virtual keyboard:
<FORM method=post>
   <H1>User information</H1>
   (1) <INPUT type=text name="last name" keyboard="en_lt_uc">
   (2) <INPUT type=text name="first name" keyboard="en_lt_lc">
   (3) <INPUT type=text name="gender" keyboard="custom [M, F, Enter]">
   (4) <INPUT type=text name="ID number" keyboard="en_nb">
   (5) <TEXTAREA rows="3" name="comment1"></TEXTAREA>
   (6) <TEXTAREA rows="3" name="comment2" keyboard="default"></TEXTAREA>
</FORM>

An exemplary call to display the virtual keyboard on Android is:
(1) mgr.showSoftInput(this, 0, "en_lt_uc");
(2) mgr.showSoftInput(this, 0, "en_lt_lc");
(3) mgr.showSoftInput (this, 0, "[M, F, Enter]");
(4) mgr.showSoftInput(this, 0, "en_nb");
(5) mgr.showSoftInput(this, 0); // default behaviour
(6) mgr.showSoftInput(this, 0, "default"); // default behaviour

A similar call would work on iOS.

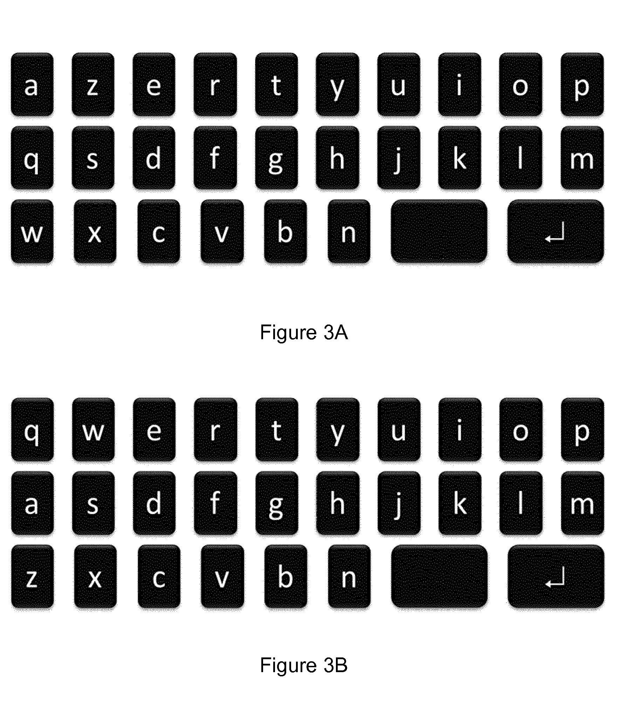

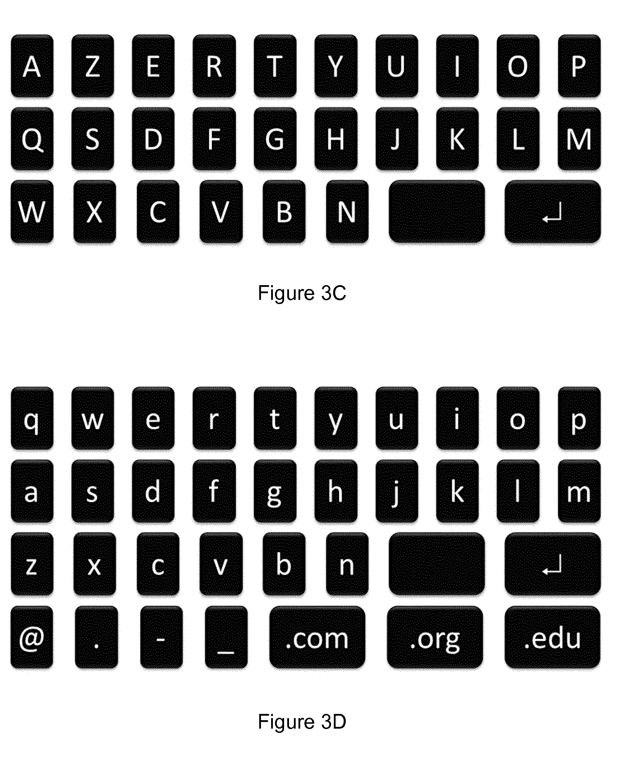

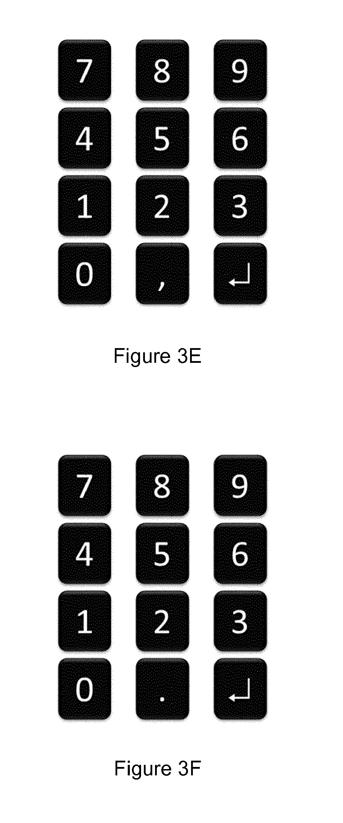

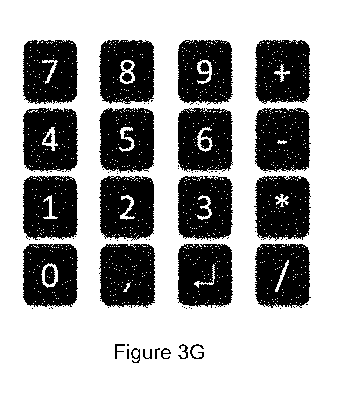

Figures 3A-3G illustrate exemplary virtual keyboards according to embodiments of the present principles. Figure 3A illustrates an exemplary virtual keyboard with lowercase letters organized the French way, i.e. "AZERTY". Figure 3B illustrates an exemplary virtual keyboard with lowercase letters organized the American and British way, i.e. "QWERTY". Figure 3C illustrates an exemplary virtual keyboard with uppercase letters organized the French way. Figure 3D illustrates an exemplary virtual keyboard adapted for entering US email addresses: it comprises lowercase letters, space, '@', '.', '-', '_', '.com', '.org', '.edu' and ENTER. Figure 3E illustrates an exemplary virtual keyboard for entering numbers the French way, i.e. comprising a comma. Figure 3F illustrates an exemplary virtual keyboard for entering numbers the American and British way, i.e. comprising a point. Figure 3F illustrates an exemplary virtual keyboard for calculations adapted to the French way.

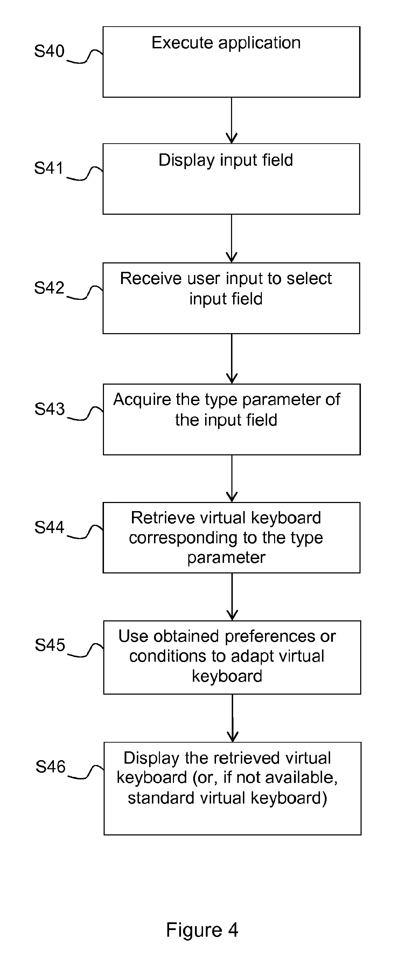

Figure 4 illustrates a method for displaying a virtual keyboard. An application 122 is executed S40, the application can for example be a web page or a so-called 'app'. The execution causes the OS 121 to display, step S41, at least one input field on the touchscreen 110. When OS 121 receives, step S42, input from a user selecting an input field, the OS acquires, step S43, the type parameter, retrieves, step S44, the corresponding virtual keyboard from its memory 130 (or downloads it from some other place) and displays, step S46, the retrieved virtual keyboard. As explained hereinbefore, the corresponding virtual keyboard can further depend on for example language (of the application or commonly used by the user) or other user preferences, as shown in step S45.

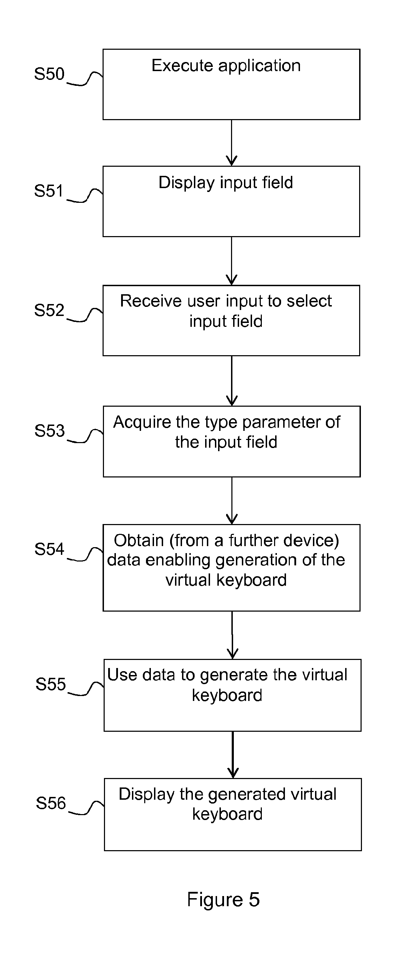

Figure 5 illustrates a variant method for displaying a virtual keyboard. An application 122, for example be a web page or an app, is executed S50, causing the OS 121 to display, step S51, at least one input field on the touchscreen 110. When OS 121 receives, step S52, input from a user selecting an input field, the OS acquires, step S53, the type parameter, obtains (possibly from a further device), step S54, data enabling generation of the virtual keyboard. It will be noted that the data can be obtained together with the type parameter in step S53. The OS 121 then generates, step S55, the virtual keyboard using the obtained data and displays, step S56, the generated virtual keyboard. In this variant too, the corresponding virtual keyboard can further depend on for example language (of the application or commonly used by the user) or other user preferences.

It will be appreciated that the present principles can provide a touchscreen device that:
- Can provide the virtual keyboards that depend on the type of data that is expected as input.
- Can optimize the resources needed.
- Can provide a coherent user experience over multi-provider applications since different virtual keyboards can be handled by the OS instead of at the application level.

Each feature disclosed in the description and (where appropriate) the claims and drawings may be provided independently or in any appropriate combination. Features described as being implemented in hardware may also be implemented in software, and vice versa. Reference numerals appearing in the claims are by way of illustration only and shall have no limiting effect on the scope of the claims.

## Claims

1. An apparatus (100) comprising:
- a touchscreen (110); and
- a processor (120) configured to:
- execute an application causing the touchscreen (110) to display at least one input field;
- receive, through the touchscreen (110), a selection of an input field, the input field being associated with a type parameter; and
- display on the touchscreen (110) a virtual keyboard corresponding to the type parameter, the virtual keyboard being one of a plurality of virtual keyboards.

2. The apparatus of claim 1, further comprising memory (130) configured to store at least one type parameter and the virtual keyboard corresponding to the type parameter.

3. The apparatus of claim 1, wherein the processor is configured to display a standard virtual keyboard in case the memory (130) does not store a virtual keyboard corresponding to the type parameter received.

4. The apparatus of claim 3, wherein the processor is configured to adapt the standard virtual keyboard depending on user preferences.

5. The apparatus of claim 1, wherein the processor is configured to execute an operating system to receive the type parameter and display the corresponding virtual keyboard.

6. The apparatus of claim 1, wherein the processor is configured to obtain at least one of preferences and conditions, and to adapt the virtual keyboard in response the at least one of preferences and conditions before display.

7. The apparatus of claim 1, wherein the processor is configured, upon reception of a special type parameter, to obtain data enabling generation of the virtual keyboard.

8. The apparatus of claim 7, wherein the data is obtained with the special type parameter.

9. The apparatus of claim 7, wherein the data is retrieved from a further device.

10. A method for displaying a virtual keyboard, comprising at an apparatus (100):
- executing (S40; S50) by a processor (120) an application causing a touchscreen (110) to display at least one input field;
- receiving (S42; S52), through the touchscreen (110), user input selecting an input field associated with a type parameter; and
- displaying (S46; S56) on the touchscreen (110) a virtual keyboard corresponding to the type parameter, the virtual keyboard being one of a plurality of virtual keyboards.

11. The method of claim 10, wherein a user configurable standard virtual keyboard is displayed in case the apparatus does not store a virtual keyboard corresponding to the type parameter received.

12. The method of claim 10, further comprising obtaining (S45) at least one of preferences and conditions, and adapting the virtual keyboard in response the at least one of preferences and conditions before display.

13. The method of claim 10, further comprising, upon reception of a special type parameter, obtaining (S54) data enabling generation of the virtual keyboard.

14. The method of claim 13, wherein the data is obtained with the special type parameter.

15. The method of claim 13, further comprising retrieving the data from a further device.
